## Europäisches Patentamt

## European Patent Office

## Office européen des brevets

(11) Veröffentlichungsnummer: **0 163 817**
**B1**

(12) **EUROPÄISCHE PATENTSCHRIFT**

(45) Veröffentlichungstag der Patentschrift: **20.06.90**

(51) Int. Cl.⁵: **F 16 F 13/00,** B 60 K 5/12

(21) Anmeldenummer: **85102674.0**

(22) Anmeldetag: **08.03.85**

(54) **Hydraulisches Motorlager.**

(30) Priorität: **07.06.84 DE 3421135**

(43) Veröffentlichungstag der Anmeldung:
**11.12.85 Patentblatt 85/50**

(45) Bekanntmachung des Hinweises auf die
Patenterteilung:
**20.06.90 Patentblatt 90/25**

(84) Benannte Vertragsstaaten:
**AT BE CH DE FR GB IT LI LU NL SE**

(56) Entgegenhaltungen:
**EP-A-0 038 062**
**EP-A-0 115 417**
**EP-A-0 163 162**
**DE-A-3 140 783**
**DE-A-3 340 152**
**FR-A-2 547 378**
**GB-A-2 137 308**

**PATENT ABSTRACTS OF JAPAN, Band 6, Nr.
161 (M-151)1039r, 24. August 1982; & JP-A-57 76
340 (TOYODA GOSEI K.K.) 13-05-1982**

(73) Patentinhaber: **AUDI AG
Auto-Union-Strasse 1 Postfach 220
D-8070 Ingolstadt (DE)**

(72) Erfinder: **Hollerweger, Heinz
Effnerstrasse 20
D-8070 Ingolstadt (DE)**
Erfinder: **VAN DEN Boom, Johannes
Marie-Luise-Fleisser-Strasse 16
D-8073 Kösching (DE)**
Erfinder: **Aden, Bodo
Hauptstrasse 17
D-8069 Königsfeld (DE)**
Erfinder: **Kuipers, Geert
Am Kirchenweg 1 a
D-8070 Ingolstadt (DE)**

(74) Vertreter: **Le Vrang, Klaus
AUDI AG Postfach 220 Patentabteilung I/EQP
D-8070 Ingolstadt (DE)**

Courier Press, Leamington Spa, England.

(56) Entgegenhaltungen:

PATENT ABSTRACTS OF JAPAN, Band 8, Nr. 83
(M-290)1520r, 17. April 1984; & JP-A-59 1829
(TOYODA GOSEI K.K.) 07-01-1984

PATENT ABSTRACTS OF JAPAN, Band 8, Nr.
203 (M-326)1640r, 18. September 1984; & JP-A-
59 93 537 (TOYODA GOSEI K.K.) 30-05-1984

PATENT ABSTRACTS OF JAPAN, Band 8, Nr.
238 (M-335)1675r, 31. Oktober 1984; & JP-A-59
117 930 (TOYODA GOSEI K.K.) 07-07-1984

PATENT ABSTRACTS OF JAPAN, Band 8, Nr.
230 (M-333)1667r, 23. Oktober 1984; & JP-A-59
110 931 (TOYODA GOSEI K.K.) 27-06-1984

# Beschreibung

Die Erfindung betrifft ein hydraulisches Motorlager entsprechend dem Oberbegriff des Anspruchs 1.

Die gattungsgemäße JP—A 59-93537 zeigt ein Motorlager mit zwei Verbindungsöffnungen, wobei die Drosselwirkung der einen Verbindungsöffnung viel höher ist als die der anderen Verbindungsöffnung. Die Verbindungsöffnung mit geringer Drosselwirkung ist abhängig vom Motorparametern verschließbar. Wenn diese Verbindungsöffnung offen ist, ist sie effektiv "wirkungslos".

Weiter sind Lager ist beispielsweise aus der japanischen Patentanmeldung Anmeldenummer 55/151699, Veröffentlichungsnummer 57/76340(A) bekannt. Das dort beschriebene Motorlager weist einen Lagerkern auf, der über eine Gummiwandan ein Widerlager angeschlossen ist. Lagerkern, Gummiwand und Widerlager schließen eine Kammer ein, die flüssigkeitsgefüllt ist. Über eine Öffnung ist an diese Kammer eine zweite flüssigkeitsgefüllte Kammer angeschlossen, deren Volumen leicht veränderbar ist. Die beiden Kammern stehen über eine dünne Öffnung in Verbindung, so daß ein Überströmen der Flüssigkeit stattfinden kann. In eine Verbreiterung der Öffnung eingepaßt ist ein verschiebbares Trennstück, das begrenzt hin- und herschiebbar ist. Kommt dieses Trennstück an seinen Anschlag, findet eine Volumenänderung zwischen den beiden Kammern nur durch Überströmen von Flüssigkeit statt. Bei kleineren Amplituden jedoch ist ein Überströmen der Flüssigkeit nicht notwendig, da das Trennstück hin- und herschiebbar ist.

Weiterhin ist aus der japanischen Patentanmeldung 59-1829 ein Zweikammerlager mit einer Drosselöffnung zwischen den beiden Lagern bekannt, bei dem durch die Erregung eines Elektromagneten abhängig von der einegeleiteten Frequenz gleichphasig oder gegenphasig das Volumen verändert wird und dadurch das Lager weicher oder härter gemacht wird. Der Druckausgleich zwischen den beiden Kammern finder über die Verbindungsöffnung zwischen den beiden Kammern mit Drosselwirkung statt.

In der Praxis hat sich gezeigt, daß bei derartigen Lagern bei großen Amplituden harte Stöße auftreten können.

Der Anspruch beschreibt ein Motorlager, das den aufgezeigten Nachteil des Standes der Technik vermeidet.

Im folgenden werden die Mechanismen der Stoßübertragung sowie die Wirkungsweise des erfindungsgemäßen Motorlagers im einzelnen beschrieben, wobei Bezug genommen wird auf die zugehörigen Figuren. Es zeigen:

Fig. 1 ein Ersatzschaltbild zur Erläuterung der Funktion eines Motorlagers nach dem Stand der Technik;

Fig. 2 die Kennlinie eines auslenkbaren Elements eines derartigen Motorlagers;

Fig. 3 das Prinzipschaltbild eines Motorlagers entsprechend der Erfindung;

Fig. 4 ein Detail des Prinzipschaltbildes nach Fig. 3; und

Fign. 5—12 bevorzugte konkrete Ausführungen des erfindungsgemäßen Motorlagers.

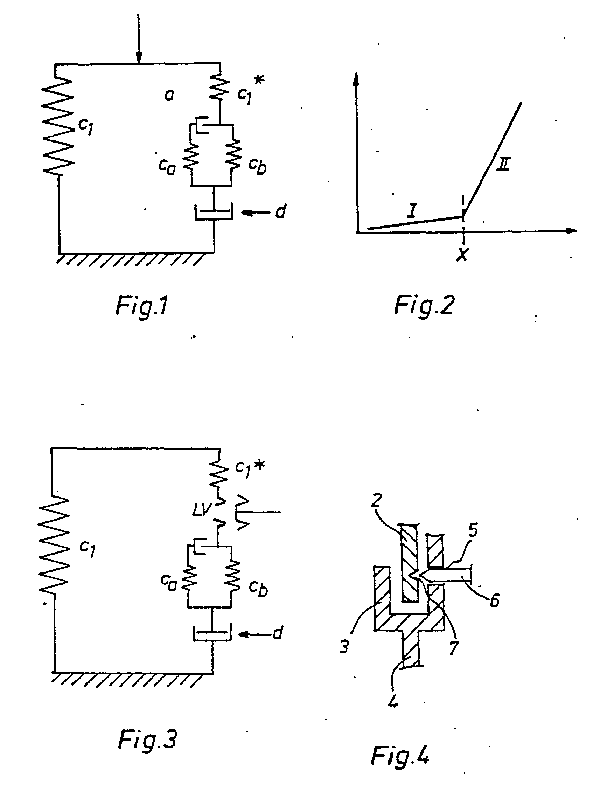

In Fig. 1 ist das Ersatzschaltild eine hydraulischen Motorlagers, wie es im Oberbegriff des Anspruchs 1 dargestellt ist, beschrieben. Die Eigenschaften des Lagers werden durch folgende Größen bestimmt: Die dynamische Federsteifigkeit (ohne die Volumensteifigkeit des Tragkörpers) wird durch die Federkonstante $c_1$ ausgedrückt, der parallel geschaltet die Federkonstante $c_1*$ ist, mit Hilfe derer die Volumensteifigkeit repräsentiert wird. In dieser Hinsicht jedoch unterscheiden sich die Einkammer- und Zweikammer-Lager nicht. Die zweite Kammer ist von der ersten Kammer durch ein mit verhältnismäßig geringer Federkraft auslenkbares Element getrennt, so daß bei Einwirkung von Kraft auf den Lagerkern der Druck in der ersten Kammer vergrößert wird, wodurch das Element ausgelenkt wird. Diese Federeigenschaft, die vor allem durch die Federkonstante des Auslenkelements bestimmt wird, ist mit $c_b$ bezeichnet, und wie in a zu erkennen ist, ist die Auslenkung bes zu einem Anschlag nach oben oder unter möglich. Kommt jedoch dieses auszulenkende Element an den Anschlag a, ist die Federkonstante $c_b$ wirkungslos geschaltet durch die härtere Federkonstante $c_a$ überlagert. Zur geeigneten Auslegung des Lagers wird $c_a$ sehr viel größer $c_b$ gewählt. Die Überströmöffnung zwischen den beiden Kammern wird durch das Dämpfungsglied d repräsentiert.

Wie eingangs erwähnt, wirken auf derartige Lager häufig kräftige Schläge ein. Dazu kommt es vor allem, wenn große Amplituden bei niederen Drehzahlen zu verarbeiten sind, insbesondere beim Anlassen des Motors oder bei noch unrundem Motorlauf, was zu großen Auslenkungen und niedrigen Drehzahlen führt.

In Fig. 2 ist aufgetragen, wie sich die Federsteifigkeit mit der Amplitude ändert. Im Bereich I ist die Federsteifigkeit $c_b$ wirksam. Im Punkt X ist die Amplitude so groß, daß ihre Höhe bis an den Anschlag a reicht. Damit wird die Federkonstante $c_a$ zusätzlich wirksam, dieser Bereich ist durch den Zweig II der Kurve dargestellt. Um den Aufprall an den Anschlag abzumildern, müßte dementsprechend versucht werden, den Knick Bereich x "auszurunden", d.h. den Übergang von I zu II nicht sprunghaft zu verändern, sondern gleitend zu gestalten. Eine andere Möglichkeit wäre, den Bereich I etwas steiler zu machen, dafür den Bereich II etwas flacher verlaufen zu lassen. Damit allerdings entfernt man sich von den jeweils gewünschten Eigenschaften des Lagers.

Dementsprechend wurde auf das in Fig. 3 dargestellte Ersatzschaltbild gegriffen, um die unerwünschten Betriebszustände zu vermeiden. Wie in dem mit LV bezeichneten Bereich zu sehen ist, ist vorgesehen, daß das untere Ende

der Feder $c_1^*$ trennbar ist von den parallel geschalteten Federn $c_a$ und $c_b$. In den Betriebszuständen, in denen die harten Schläge auftreten, also bei niedrigen Motordrehzahlen, wäre es dementsprechend möglich, die Verbindung aufzutrennen, so daß die Parallelbeschaltung $c_a$ und $c_b$, die ja in dem Übergang x für den harten Stoß verantwortlich ist, unwirksam bleibt, so daß die konstante Federkonstante nur durch die Feder $c_1$ gebildet wird. In diesen Betriebszuständen ist keine Dämpfung erforderlich.

Fig. 4 zeigt eine prinzipielle Möglichkeit, diese Anbindung vorzusehen. Mit 2 ist das an die Feder $c_1^*$ angebrachte Glied bezeichnet, das in einer klammerartigen Konsole 3 aufgenommen wird, von der bei 4 die Parallelschaltung der Federn $c_a$ und $c_b$ wegführt. Die klammerartige Konsole 3 besitzt eine Öffnung 5, durch die ein Fixierglied 6 einführbar ist, das im eingeführten Zustand den Fortsatz 2 in einer entsprechenden Ausnehmung 7 starr hält und mit der Klammer und dem entsprechenden Fortsatz 4 starr verbindet.

Im folgenden werden in einigen Ausführungsbeispielen konkrete Ausführungen von Hydrolagern dargestellt, bei denen die Erfindung verwirklicht ist.

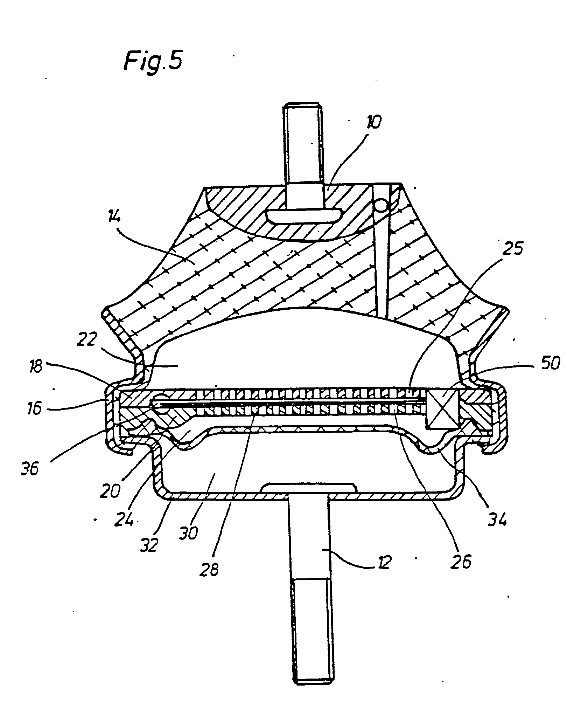

Fig. 5 zeigt eine erste Ausführungsform eines Hydrolagers. Mit 10 ist der Lagerkern bezeichnet, an dem der Motorblock befestigt ist. Das Widerlager 12 ist karosserieseitig befestigt, und das zwischen dem Lagerkern 10 und dem Widerlager 12 befindliche Lager hat die Aufgabe, die Motorschwingungen weitgehend zu absorbieren. Dazu ist ein verhältnismäßig kräftiges Gummiteil 14 vorgesehen, das den Lagerkern 10 an das Widerlager 12 anbindet und gleichzeitig einen Teil des Einschlusses für eine obere Kammer 22 für das Hydrolager darstellt. Das Gummiteil 14 ist über eine Wand 16 mit dem Widerlager 12 verbunden. Die Kammer 22, die mit einer Flüssigkeit, beispielsweise Wasser, gefüllt ist, ist von einer zweiten Kammer 24 durch eine Wand getrennt, die aus zwei Teilen 18 und 20 besteht. Zwischen diesen beiden parallel zueinander verlaufenden Teilwänden 18 und 20 ist eine Membran 28 eingespannt, die in einem Hohlraum 36, der von den beiden Wänden 18 und 20 begrenzt wird, begrenzt frei beweglich gelagert ist. Die in Fig. 5 obere Wand 18 besitzt Durchströmöffnungen 25, die untere Teilwand 20 besitzt Durchströmöffnungen 26, durch die Flüssigkeit zu beiden Seiten der Membran gelangen kann. Entweder durch die Porösität der Membran 28 oder durch einen seitlichen Umströmweg 36 wird ein begrenzter Flüssigkeitsaustausch zwischen der Kammer 22 und der Kammer 24 ermöglicht. Überströmen von der Kammer 22 in die Kammer 24 bedeutet, daß die untere abschließende Wand 34 der Kammer 24 in ihrer Form verändert wird, um das Volumen der Kammer 24 zu vergrößern. Durch das Überströmung der Flüssigkeit von der Kammer 22 in die Kammer 24 findet eine gewisse Drosselung statt. Niederfrequente Schwingungen können durch das Überströmen ausgeglichen werden, während bei hochfrequenten schwingungen, die auf die Kammer 22 wirken, ein Ausgleich der Amplituden durch Überströmen von Flüssigkeit nicht mehr stattfinden kann. Hier jedoch ist ein begrenzter Ausgleich möglich durch ein Nachgeben der Membran 28. Bei größeren Ausschlägen jedoch legt sich die Membran 28 an die Wand 20, so daß die Federeigenschaft des Lagers nur mehr durch die Volumensteifigkeit der Wand 14 gebildet wird.

Erfindungsgemäß ist bei Bypass 50 vorgesehen, der eine Verbindung zwischen den Kammern 22 und 24 schafft. Dieser Bypass 50 ist zu öffnen, wenn die harten Lagereigenschaften beispielsweise bei niedrigen Drehzahlen unerwünscht sind, so daß, wenn die Membran 28 an die Wand 20 zur Anlage kommt, Flüssigkeit durch den Bypass 50 von der Kammer 22 in die Kammer 24 fließt.

Der Bypass 50 besteht aus einem willkürlich öffen- und schließbaren Ventil, das bei höheren Drehzahlen geschlossen wird, so daß das Lager bei kleinen Amplituden weich, bei größeren Amplituden hart wird. Bei niedrigen Drehzahlen jedoch wird das Ventil 50 geöffnet, so daß auch bei größeren Amplituden das Lager weich bleibt und keine harten Schläge übertreten, so daß beispielsweise bei unrundem Motorlauf oder beim Anlassen des Motors die verhältnismäßig niederfrequenten Schläge großer Amplitude vermieden werden.

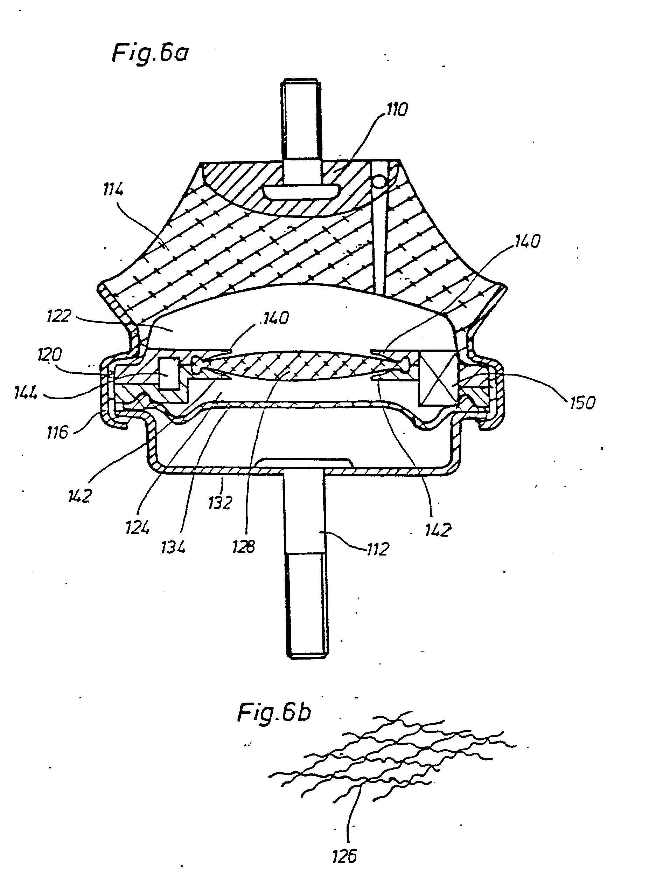

Fig. 6a zeigt ein weiteres hydraulisches Motorlager. Auch hier sind wieder ein Lagerkern 110 und ein Widerlager 112 vorgesehen. Der Lagerkern 110 ist mit dem Widerlager 112 über das Gummiteil 114 und die starre Gehäusewand 116 verbunden. Die Gehäusewand 116 führt über ein tassenförmiges Metallteil 132 zum Lagerkern 112.

Das von Gummiteil 114, Gehäusewand 116 und tassenförmigem Teil 132 eingeschlossene Volumen weist eine nachgiebige Gummiwand 134 auf. Die nachgiebige Gummiwand 134 umschließt zusammen mit der Gehäusewand 116 und dem Gummiteil 114 ein flüssigkeitsgefülltes Volumen, das durch eine Membran 128, die an ihren Enden in einem Gummibereich 120 gehaltert ist, in zwei Kammern 122 und 124 getrennt wird. Die Membran 128 ist an ihrem Außenumfang im Gummi 120 derart gelagert, daß sie sich in einem begrenzten Bereich normal zu ihrer Fläche verhältnismäßig frei bewegen kann, um aber bei größeren Auslenkungen an Vorsprüngen 140 und 142 zur Anlage zu kommen, so daß eine weitere Auslenkung vermieden wird.

Die Membran kann verhältnismäßig starr oder auch dehnbar ausgeführt sein. Die Dehnbarkeit der Membran 128 ist auf die Gewebestruktur rückführbar. Die Membran besteht aus einem Gewebe, deren Fäden 126, wie aus Fig. 6b zu ersehen, in sich gewellt sind, so daß sie gedehnt werden können. Es ist jedoch bis zur Streckung der Fäden 126 gekommen, was in etwa gleichzeitig mit der Anlage der Membran 128 an die Vorsprünge 140 und 142 eintritt, ist eine weitere Dehnung der Membran nicht möglich, die Membran 128 bildet somit für die Kammer 122 in diesem Augenblick eine verhältnismäßig starre Wand.

In dem die Membran 128 umfangsmäßig einfassenden Gummi 120 ist ein Durchfluß vorgesehen, der die Kammer 122 mit der Kammer 124 verbindet. Dieser Durchfluß 144 wirkt als Drossel, so daß bei statischen und niederfrequenten Belastungen ein Flüssigkeitsaustausch zwischen den Kammern 122 und 124 möglich ist. Bei höherfrequenten Belastungen kann der Flüssigkeitsaustausch zwischen den Kammern 122 und 124 jedoch nicht schnell genug erfolgen, so daß die Federeigenschaften des Lagers bei kleinen Amplituden durch die Elastizität der Membrane 128 bestimmt wird, die bei allem Druck auf das Volumen 122 nachgibt, nach unten in Richtung zum Widerlager 112 ausbeult und schließlich ihre Dehnungsgrenze erreicht hat, wobei sie an den Anschlag 142 anliegt.

In diesem Augenblick wird die Federeigenschaft des Lagers im wesentlichen durch die Volumensteifigkeit des Gummiteiles 114 bestimmt, so daß das Lager verhältnismäßig hart wird.

Beim Anlassen oder unrundem Lauf des Motors, wobei sehr hohe Amplituden auftreten, ist diese Starre des Lagers unerwünscht, und es ist deshalb ein Bypass 150 vorgesehen, der die Kammer 122 mit der Kammer 124 verbindet, wobei die Durchflußöffnung eine ausreichende Größe besitzt, so daß die Drosselwirkung vernachlässigt werden kann. Somit ist weitgehend ein freies Überströmen von Flüssigkeit aus der Kammer 122 in die Kammer 124 möglich, wobei die Kammer 124 durch die Nachgiebigkeit ihrer unteren Begrenzung 134 in der Lage ist, ohne weiteres Flüssigkeit aufzunehmen. Dieser Durchfluß oder Bypass 150 läßt sich immer dann öffnen, wenn die harten Eigenschaften des Lagers nicht erwünscht sind, sondern vielmehr große Amplituden zu erwarten sind, die nicht auf das Widerlager 112 übertragen werden sollen. Typische Betriebszustände dafür sind das Anlassen des Motors oder ein noch unrunder Lauf des Motors bei oder sogar unter der normalen Drehzahl. Bei diesen Betriebszuständen läßt sich ein Ventil betätigen, das den Durchfluß 150 öffnet, um ihn bei Motordrehzahlen, die etwas über der Leerlaufdrehzahl liegen, wieder zu schließen.

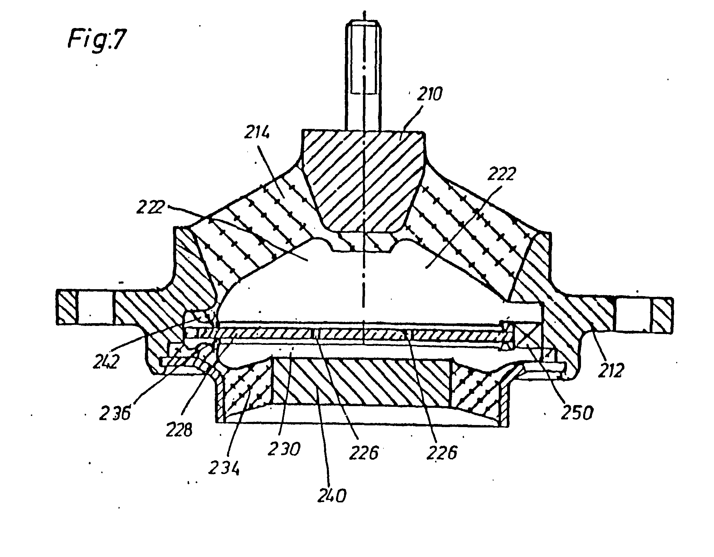

In Fig. 7 ist eine weitere Ausführungsform eines hydraulischen Motorlagers vorgesehen, auch dieses Lager besitzt einen Lagerkern 210 sowie ein Widerlager 212. Lagerkern 210 und Widerlager 212 sind über ein Gummiteil 214 miteinander verbunden. Die Flüssigkeit in diesem Lager wird eingeschlossen im wesentlichen von dem Gummi 214, in das der Lagerkern 210 einvulkanisiert ist, von dem in etwa ringförmigen Widerlager 212 sowie einem an der Unterseite des ringförmigen Widerlagers 212 befestigten ringförmigen Gummiteil 234, der in seinem Zentrum eine Masse 240 trägt.

Etwa in Höhe des ringförmigen Widerlagers 212 befindet sich eine Trennwand 228, die das in dem Lager eingeschlossene Volumen in zwei Kammern 222 und 230 trennt.

Die starre Trennwand 228 besitzt Durchströmöffnungen 226, die aufgrund ihrer geringen Abmessungen eine Drosselwirkung beim Überströmen von Flüssigkeit aus der Kammer 222 in die Kammer 230 hervorrufen. Die starre Wand 228 ist umfangsmäßig zwischen weichen Gummilippen 236 eingeklemmt, so daß die Trennwand 228 in normaler Richtung zu ihrer Fläche verhältnismäßig leicht mit geringen Amplituden verschiebbar ist. Bei größeren Amplituden jedoch gerät die Wand an einen aus Gummi gebildeten Anschlag 242, so daß eine weitere Auslenkung im wesentlichen unterbunden wird.

Die in die Wand 234 der unteren Kammer 230 elastisch eingelassene Masse 240 dient als Tilgermasse, um bei höheren Frequenzen durch ein gegenphasiges Schwingen zu den über den Lagerkern 210 eingeleiteten Schwingungen das Absorptionsverhalten des Lagers gegenüber der statischen Steifigkeit zu verbessern. Dieses Tilgerprinzip ist jedoch nicht Gegenstand der hier vorliegenden Erfindung un ist bekannt.

Erfindungsgemäß ist zwischen der Kammer 222 und der Kammer 230 eine verschließbare Öffnung 250 vorgesehen, die wie bei den bereits beschriebenen Lagern bei niederigen Drehzahlen geöffnet und bei hohen Drehzahlen geschlossen werden kann. Die Abmessungen der Öffnung 250 sind derart, daß die Drosselwirkung vernachlässigt werden kann, so daß ein in erster Näherung freies Überströmen von der Kammer 222 in die Kammer 230 ermöglicht wird.

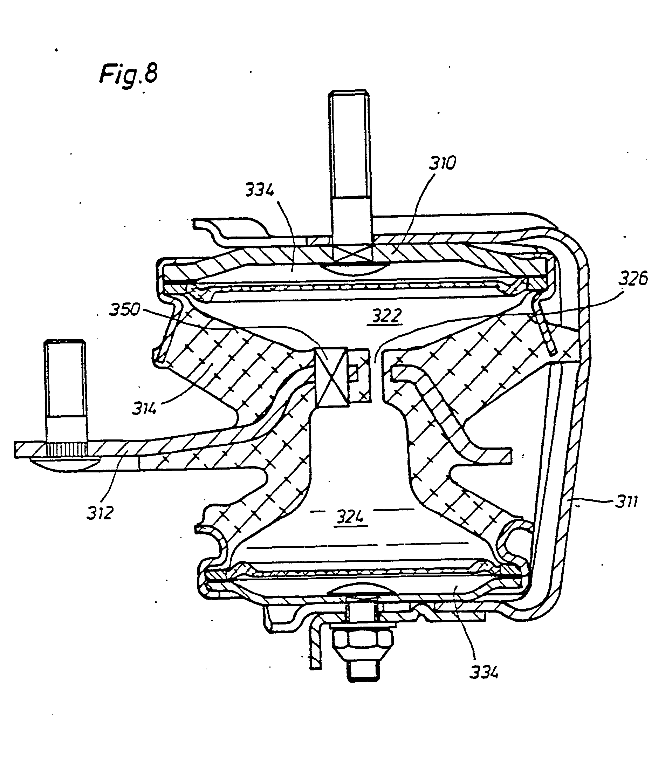

In Fig. 8 ist eine weitere Ausführungsform eines Lagers beschrieben. Ein Lagerkern 310 ist über ein Gummiteil 314 an ein Widerlager 312 angeschlossen. Das Gummiteil 314 umschließt in etwa wie ein Zylindermantel ein Flüssigkeitsvolumen, wobei eine Einschnürung in der Mitte dieses Volumen in zwei Kammern 322 und 324 trennt. Auf seiner Oberseite wird das Flüssigkeitsvolumen durch eine mit dem Widerlager 310 verbundene Platte abgeschlossen, die über einen Bügel 311 mit der Unterseite der unteren Kammer 324 zwangsverbunden ist, so daß eine Bewegung des Widerlagers 310, die zu einer Einengung des Volumens 322 führt, gleichzeitig zu einer Zwangsbewegung der unteren Platte in die gleiche Richtung führt, die eine Vergrößerung des Volumens 324 bedingt.

Ober- und unterhalb des Flüssigkeitsvolumens ist eine kleine nicht flüssigkeitsgefüllte Kammer 334 vorgesehen, so daß kleine Amplituden nicht dazu führen, daß eine Veränderung des Flüssigkeitsvolumens vorgesehen ist. Erst bei größeren Amplituden tritt eine Wechselwirkung des Widerlagers 310 mit dem flüssigkeitsgefüllten Volumen 322 und 324 auf, so daß sich in der Kammer 322 ein Überdruck und in der Kammer 324 ein Unterdruck aufbaut. Zwischen den beiden Kammern ist eine Drosselöffnung 326 vorgesehen, durch die im statischen Falle oder bei niederen Frequenzen durch einen Flüssigkeitsausgleich Überund Unterdruck ausgeglichen werden können, so daß das Lager hier verhältnismäßig weich bleibt. Wenn jedoch die Durchströmungen durch die Drosselöffnung 326 so groß werden, daß ein schneller Ausgleich nicht mehr möglich ist, macht sich die Drosselwirkung bemerkbar, und das Lager wird verhältnismäßig hart.

Ist bei großen Amplituden die Härte des Lagers unerwünscht, kann eine zur Drossel 326 parallele Öffnung 350 geöffnet werden, deren Weite ein Überströmen von Flüssigkeit im wesentlichen ohne Drosselwirkung ermöglicht. Wie bei den anderen Lagern kann hier ein Ventil vorgesehen werden, das die Öffnung 350 bei bestimmten Betriebszuständen wieder verschließt, ein derartiges Verschließen ist insbesondere bei höheren Motordrehzahlen erwünscht.

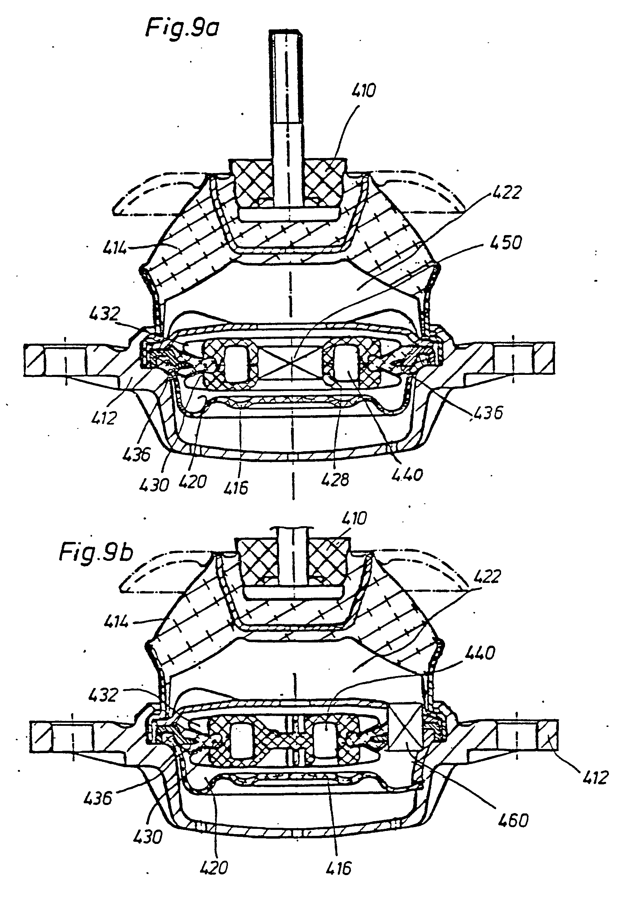

In den Fig. 9a und 9b ist eine weitere Ausführungsform eines hydraulischen Motorlagers gezeigt, bei der die Erfindung verwirklicht ist. Über einen Lagerkern 410 wird auf ein in etwa tassenförmig ausgestaltetes Widerlager 412 über ein Gummiteil 414 die Schwingung übergeleitet. Das glockenförmige Gummiteil 414 und das tassenförmige Widerlager 412 schließen eine Raum ein, dessen oberer Teil übereine nachgiebige Gummiwand 416, beispielsweise einen Rollbalg, abgedichtet ist. Gummiteil 414 und Gummiwand 416 umfassen das flüssigkeitsgefüllte Volumen, das in zwei Kammern 420 und 422 aufgeteilt ist. Zwischen den Kammern 420 und 422 ist eine in sich starre, jedoch verschiebbare Trennwand 428 vorgesehen, die eine schneckenförmige Drossel 440 enthält, die als Verbindungsöffnung die Kammer 420 mit der Kammer 422 verbindet. Die starre Wand 420 ist weichelastisch in einem Gummiteil 430 aufgehängt. Somit kann die Wand 428 nach oben und unten ausgelenkt werden. Bei größeren Auslenkungen stößt jedoch ein Vorsprung 432, der an der in etwa in auf sich kreisförmigen Wand radial vorgesehen ist, gegen die Befestigung 436 der weichen Aufhängung 430, so daß eine weitere Auslenkung der starren Wand 428 kaum möglich ist. Der Anschlag 436 für den Vorsprung 432 kann aus Gummi sein, so daß die Auslenkung der starren Wand 428 allmählich abgefangen wird.

Wie in den vorhergehenden Ausführungsformen ist ebenfalls ein Durchlaß 450 bzw. 460 vorgesehen. Der Durchlaß 450 ist in der starren Wand 428 mittig angeordnet, während alternativ dazu ein Durchlaß 460 seitlich neben der starren Wand in den nicht verschiebbaren Bauteilen vorgesehen ist. Die Ansteuerung beider Durchlässe geschieht in der oben beschriebenen Weise.

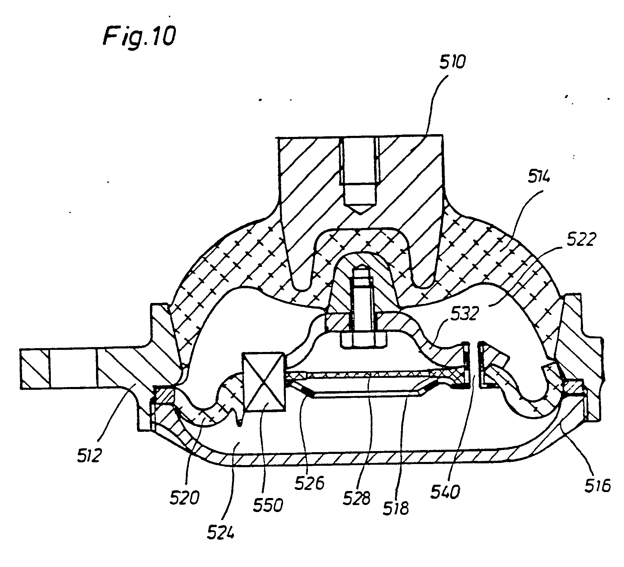

In Fig. 10 ist eine weitere Ausführungsform eines Lagers beschrieben. Der Lagerkern 510 leitet die Schwingungen über ein Gummiteil 514 auf ein Widerlager 512. Dieses tassenförmige Gummiteil 514 bildet zusammen mit einem unteren Abschluß 516 ein Hydraulikvolumen, in dem sich eine Trennwand 518 befindet. Die Trennwand 518 ist mit dem Widerlager über einen Rollbalg 520 verbunden, während sie mit einem Steg 532 mit dem Lagerkern 514 verbunden ist. Eine Bewegung des Lagerkerns 510 führt somit zu einer zwangsweisen Bewegung der Trennwand 518. Da die Trennwand 518 zugleich das Flüssigkeitsvolumen in zwei Kammern 522 und 524 einteilt, wird durch die Bewegung des Lagerkernes 510 die eine der beiden Kammern 522 oder 524 in ihrem Volumen vergrößert, während die andere verkleinert wird. Zum Ausgleich dieser Volumenänderungen ist in der Trennwand 518, die einen ringförmigen starren Teil besitzt, mittig ein Membrane 528 vorgesehen, die nach oben und unten auslenkbar ist. Diese Membran 528 kommt jedoch bei größeren Auslenkungen an einen Anschlag 526 zu liegen, so daß dann ihre Auslenkfähigkeit begrenzt ist und ein weiterer Flüssigkeitsaustausch zwischen den Kammern 522 und 524 nur über eine Drosselöffnung 540 stattfinden kann. Bei hohen Frequenzen kann jedoch der Flüssigkeitsaustausch in den Kammern 522 und 524 durch die kleine Drosselöffnung nur sehr begrenzt stattfinden, so daß das Lager in sich verhältnismäßig hart wird.

Um die bei größeren Amplituden unerwünschte Härte in bestimmten Betriebszuständen wie niedere Drehzahl zum vermeiden, ist eine große Öffnung zwischen der Flüssigkeitskammer 522 und der Flüssigkeritskammer 524 vorgesehen, die beispielsweise an dem Anlenkpunkt der Trennwand 518 an den Rollbalg 520 vorgesehen sein Kann. Diese Öffnung 550 ist wahlweise öffen- und verschließbar, wobei zur Steuerung der Öffnung bzw. Schließung ein Motorparameter herangezogen werden kann. Wie in den vorgenannten Fällen bietet sich dazu die Drehzahl an, so daß oberhalb einer bestimmten Drehzahlschwelle der Durchlaß 550 verschlossen ist, so daß die beiden Kammern nur mehr über die Drossel 540 miteinander Flüssigkeit austauschen können. Bei niederen Drehzahlen ist der Durchlaß 550 geöffnet, so daß die Drossel 540 im wesentlichen wirkungslos geschaltet ist, da ein Überströmen der Flüssigkeit von der Kammer 522 in die Kammer 524 und umgekehrt über den Durchlaß 550 vonstatten gehen kann. Das Lager bleibt also auch bei Amplituden, die im geschlossenen Zustand des Durchlasses 550 zu einem Anschlag der Membran 528 an ihre Anschlagstutzen 526 führen würde, weich.

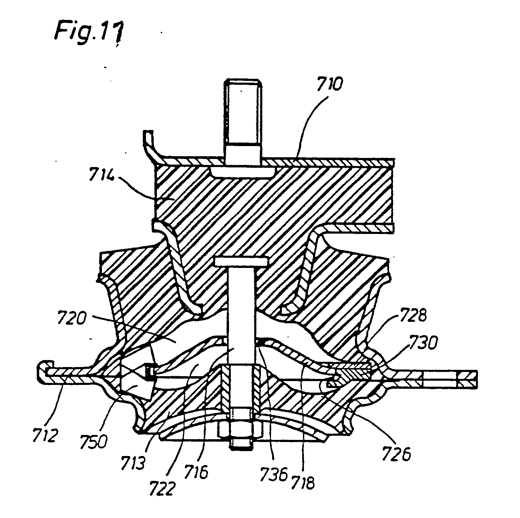

Fig. 11 zeigt eine weitere Ausführungsform des erfindungsgemäßen Lagers. Es ist ein Lagerkern 710 vorgesehen, der über Gummi 714 mit dem Widerlager 712 verbunden ist. Im Innern des Lagers ist ein Flüssigkeitsvolumen eingeschlossen, das einerseits begrenzt wird durch eine Gummiwand 713, die mit den Widerlagern verbunden ist, und durch das Gummi 714, die zwischen Lagerkern 710 und Widerlager 712 angeordnet sind. Ein Stempel 716 verbindet das Gummi 714 mit der Gummiwand 713, so daß beide miteinander zwangsgeführt werden. Der Stempel 716 führt durch die Öffnung einer Platte 718, die in dem Flüssigkeitsvolumen eingelagert ist und das volumen in zwei Kammern 720 und 722 trennt. Die Platte ist an ihren radialen Enden zwischen zwei Anschlägen 728 und 730, beide mit dem Widerlager 712 verbunden, gelagert, wobei ein Spiel 726 vorgesehen ist. Relative Bewegungen zwischen dem Lagerkern 710 und dem Widerlager 712 führen zu Volumenänderungen der Kammern 720 und/oder der Kammer 722, was bei kleinen Amplituden durch die Verschiebung der Platte 718 im Rahmen des Spieles 726 ausgeglichen werden kann. Bei größeren Änderungen kann von der Kammer 720 durch einen schmalen Spalt in eine Öffnung 736 am Rande des Stempels 716, der ebenfalls durch die Öffnung 736 durchgeführt ist, Flüssigkeit übertreten. Wenn jedoch diese Drossel 736 infolge höherer Frequenzen "zumacht", d.h., der genügende Zeitraum für das Überströmen der Flüssigkeit von der Kammer 720 in die Kammer 722 oder zurück nicht mehr zur Verfügung steht, wird das Lager sehr hart.

Abhilfe die Verbindung 750 zwischen den beiden Kammern, die die Platte 718 umgeht und eine großdimensionierte Verbindung zwischen den Kammern 720 und 722 schafft, so daß die Drosselwirkung aufgehoben wird. Der ungehinderte Flüssigkeitsübertritt von der Kammer 720 in die Kammer 722 und zurück macht das Lager verhältnismäßig weich.

Wie in den anderen Ausführungsformen auch wird diese Öffnung durch Motorbetriebsparameter wie beispielsweise die Drehzahl gesteuert.

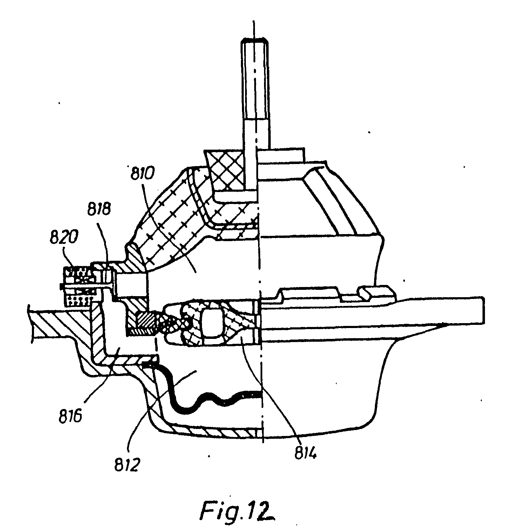

Fig. 12 beschreibt eine weitere Ausführungsform eines Lagers, das in seinem Aufbau weitgehend den anderen Lagern entspricht, zwei Kammern 810 und 812 werden durch eine auslenkbares Element 814 voneinander getrennt, es ist zwischen den beiden Kammern ein Bypass 816 vorgesehen, der die beiden Kammern 810 und 812 wahlweise miteinander verbindet. In dem Bypass 816 ist ein Ventil 818 vorgesehen, das in seiner Schließstellung kein Überströmen von Flüssigkeit von der Kammer 810 in die Kammer 812 über den Bypass 816 ermöglicht, in seiner Öffenstellung jedoch eine Verbindung 816 großen Durchmessers zwischen den beiden Kammern 810 und 812 schafft. Das Ventil 818 wird durch einen Elektromagneten 820 betätigt, der beispielsweise über die Drehzahl des zu lagernden Motors gesteuert wird.

Es dürfte ohne weiters einleuchten, daß die Aufzählung der verschiedenen Variationen des erfindungsgemäßen Prinzipes nicht erschöpfend ist, sondern daß zahlreiche Abänderungen denkbar sind. Weiterhin ist es selbstverständlich möglich, die erfindungsgemäße öffen- und schließbare Verbindung zwischen den beiden Hydraulikkammern in hydraulischen Motorlagern nicht nur durch Motorparameter wie beispielsweise die Drehzahl zu öffnen und zu schließen. Vielmehr läßt sich diese Verbindung auch immer dann öffnen, wenn das Lager zuhart ist und ein weicheres Ansprechverhalten gewünscht wird, was sich beispielsweise auch durch Sensoren feststellen ließe. In diesen Ausführungsformen käme man dann von einem gesteuerten Lager zu einem geregelten Lager, bei dem das Ansprechen auf zu harte Stöße dazu führt, daß die Drossel wirkungslos geschaltet wird.

**Patentanspruch**

Hydraulisches Motorlager mit
einem Lagerkern (10),
einem Widerlager (12),
einer ersten, zumindest teilweise mit einer Flüssigkeit gefüllten Kammer (22), auf deren Volumen der Lagerkern einwirkt,

einer zweiten, zumindest teilweise mit einer Flüssigkeit gefüllten, volumenveränderbaren Kammer (24),

einer Verbindungsöffnung (36) mit Drosselwirkung zum Überströmen der Flüssigkeit von der ersten Kammer (22) in die zweite Kammer (24),

einer zweiten Verbindungsöffnung (50) zwischen den Kammern, die in geöffnetem Zustand eine gegenüber der ersten Verbindungsöffnung (36) vernachlässigbare Drosselwirkung besitzt,

einer Entkoppelungsvorrichtung, wodurch die zweite Verbindungsöffnung (50) von außen gesteuert öffen- und schließbar ist,

gekennzeichnet durch ein auslenkbares, durch das Volumen der ersten Kammer (22) beeinflußtes Element (28) sowie eine Begrenzungseinrichtung (25, 26) zur Begrenzung der Auslenkung des auslenkbaren Elementes,

und dadurch, daß die zweite Verbindungsöffnung (50) unterhalb einer vorgebbaren Drehzahlschwelle des Motors geöffnet und oberhalb der Schwelle durch die Entkoppelungsvorrichtung geschlossen wird.

**Revendication**

Support de moteur hydraulique, comprenant
un noyau de support (10),
une butée (12),
une première chambre (22) qui est remplie au moins partiellement d'un liquide et sur le volume de laquelle agit le noyau de support,

une seconde chambre (24) à volume variable, remplie au moins partiellement d'un liquide,

une ouverture de communication (36) à effet d'étranglement pour le passage du liquide de la première chambre (22) vers la seconde chambre (24),

une seconde overture de communication (50) entre les chambres qui, à l'état ouvert, produit un effet d'étranglement négligeable par rapport à celui de la première ouverture de communication (36),

un dispositif de désaccouplement par lequel la seconde ouverture de communication (50) peur être ouverte et fermée sous la commande de moyens extérieurs,

caractérisé par un élément (28) déformable sous l'influence du volume de la première chambre (22), ainsi que par un dispositif de limitation (25, 26) pour limiter la déformation de l'élément déformable, et par le fait que la seconde ouverture de communication est ouverte par le dispositif de désaccouplement au-dessous d'un seuil prédéfinissable de la vitesse de rotation du moteur et est fermée au-dessus de ce seuil.

**Claim**

Hydraulic engine mount with
a mount core (10),
a support (12),

a first chamber (22), at least partially filled with a liquid, the volume of which is influenced by the mount core,

a second, variable-volume, chamber (24), at least partially filled with a liquid,

a connecting opening (36) with restricting action for the overflow of the liquid from the first chamber (22) into the second chamber (24),

a second connecting opening (50) between the chambers which when open has a negligible restricting action when compared with the first connecting opening (36),

and an uncoupling device by which the second connecting opening (50) can be opened and closed with external control,

characterized by a deflectable element (28) which is influenced by the volume of the first chamber (22), and a limiting device (25, 26) for limiting the deflection of the deflectable element,

and characterized in that the second connecting opening (50) is opened below a preselectable rotational speed threshold of the engine and is closed above the threshold by the uncoupling device.

EP 0 163 817 B1

Fig.1

Fig.2

Fig.3

Fig.4

1

Fig.5

Fig.6a

Fig.6b

Fig.7

4

Fig.8

Fig.9a

Fig.9b

*Fig.10*

Fig.11

Fig.12